# EUROPÄISCHE PATENTSCHRIFT

(11) **EP 0 769 318 B1**
(45) Veröffentlichungstag und Bekanntmachung des Hinweises auf die Patenterteilung: **24.01.2001**
(21) Anmeldenummer: 96111477.4
(22) Anmeldetag: 17.07.1996
(51) Int. Cl.: B01D 46/04, B01D 29/62

(54) **Vorrichtung und Verfahren zum Abreinigen von Filterelementen**
Device and process for cleaning filter elements
Dispositif et procédé pour nettoyer des éléments de filtre

(30) Priorität: 21.10.1995 DE 19539277
(43) Veröffentlichungstag der Anmeldung: 23.04.1997
(73) Patentinhaber: Lurgi Energie und Entsorgung GmbH, 40880 Ratingen (DE)
(72) Erfinder: Dehn, Günther, 46485 Wesel (DE); Schmitt, Joachim, 47506 Neukirchen-Vluyn (DE)
(74) Vertreter: Radünz, Ingo, Dipl.-Ing.

(56) Entgegenhaltungen:
- DE-A- 3 341 065
- DE-A- 3 718 846
- PATENT ABSTRACTS OF JAPAN vol. 11, no. 246 (C-439) [2693] , 11.August 1987 & JP-A-62 053721 (NIPPON KOKAN K.K.), 9.März 1987,

## Beschreibung

Die Erfindung betrifft eine Vorrichtung und Verfahren zum Abreinigen von Filterelementen mit Hilfe von Pulsgas führenden Abreinigungslanzen gemäß dem Oberbegriff der Patentansprüche 1 und 2.

Bei einer derartigen Vorrichtung wird das Pulsgas über eine durch ein Absperrorgan abgesicherte Pulsgasleitung einem Pulsgasbehälter entnommen und im Gegenstrom zu dem zu reinigenden Gas durch ein einzelnes Filterelement oder einer Gruppe von Filterelementen kurzfristig geblasen. Durch den auf diese Weise erzeugten Pulsgasstrom wird der Filterkuchen von den Filterelementen abgesprengt. Die Menge des in das Filterelement eingeblasenen Pulsgases bestimmt sich nach der Größe und der Öffnungszeit des Absperrorganes. Ist wie bei der aus der WO 88/07404 bekannten Vorrichtung jeder Abreinigungslanze nur eine mit einem einzigen Absperrorgan versehene Pulsgasleitung zugeordnet, so ist der Pulsgasdurchsatz und die Höhe des Impulses während der Abreinigungsphase vorgegeben. Außerdem ist bei großen Filtereinheiten mit entsprechend großen Gruppen von Filterelementen eine solche Anordnung störungsanfällig und erfordert eine große und teure Armatur.

Der Erfindung liegt die Aufgabe zugrunde, das Abreinigungsverhalten der gattungsgemäßen Vorrichtung zu verbessern und den verfahrenstechnischen Bedingungen des Filters anzupassen.

Diese Aufgabe wird bei einer gattungsgemäßen Vorrichtung erfindungsgemäß durch die kennzeichnenden Merkmale des Patentanspruches 1 gelöst. Ein Verfahren ist Gegenstand des Patentanspruches 2.

Durch die unterschiedlichen Ansteuerzeiten der parallel geschalteten Absperrorgane kann der sich aus dem Pulsgasstrom ergebende Abreinigungsimpuls in seinem zeitlichen Verlauf beeinflußt werden. Sind zu Beginn des Abreinigungsvorganges alle Absperrorgane geöffnet, so stellt sich aufgrund des erhöhten Pulsgasdurchsatzes ein hoher Druckimpuls ein, der ein Ablösen des Filterkuchens von den Filterelementen bewirkt. Bei vorgegebener Größe des Absperrorgans bestimmt die Ansteuerzeit den Pulsgasdurchsatz, so daß sich die Pulsgasmenge durch die Anzahl und die Größe der parallel geschalteten Absperrorgane variieren läßt. Schließt eines der Absperrorgane, während die übrigen noch geöffnet sind, so verringert sich aufgrund des nun verminderten Durchsatzes das Druckniveau des Abreinigungsimpulses. Dieser verringerte Impuls verhindert eine Wiederanlagerung des abgelösten Staubes an den gerade abgereinigten Filterelementen. Die Impulshöhe und der Pulsgasverbrauch lassen sich damit optimal einstellen und den verfahrenstechnischen Bedingungen des Filters, z. B. dem Verschmutzungsgrad, anzupassen. Darüber hinaus können im Rahmen der erfindungsgemäßen Vorrichtung verhältnismäßig kleine Armaturen mit einem für Abreinigung günstigen Zeitverhalten eingesetzt werden. Bei einem Ausfall eines der Absperrorgane ist immer noch eine eingeschränkte Abreinigung der betreffenden Filterelemente möglich.

Ein Ausführungsbeispiel der Erfindung ist in der Zeichnung dargestellt und wird im folgenden näher erläutert. Es zeigen
- Fig. 1: den prinzipiellen Aufbau einer Vorrichtung zur Abreinigung von Filterkerzen und
- Fig. 2: einen typischen zeitlichen Impulsverlauf.

Ein nur schematisch und teilweise dargestelltes Filter zur Reinigung von staubbeladenem Rohgas enthält einen Filterbehälter 1, dessen Innenraum z. B. durch eine Lochplatte 2 in einem Rohgasraum und einen Reingasraum 4 aufgeteilt ist. An der Lochplatte 2 sind Filterelemente in Form von hohlzylindrischen, einseitig geschlossenen Filterkerzen 5 aufgehängt. Als Filterelemente können auch Filterschläuche verwendet werden. Die Filterkerzen 5 ragen in den Rohgasraum 3 hinein, während das offene Ende der Filterkerzen 5 in den Reingasraum 4 einmündet. Das durch einen Eintrittsstutzen in den Rohgasraum 3 aufgegebene staubbeladene Rohgas durchströmt die Filterkerzen 5, wobei der vorhandene Staub sich auf der Außenseite der Filterkerzen 5 anlagert. Das von Staub befreite Reingas tritt in den Reingasraum 4 ein und wird von dort über einen Austrittsstutzen abgeführt.

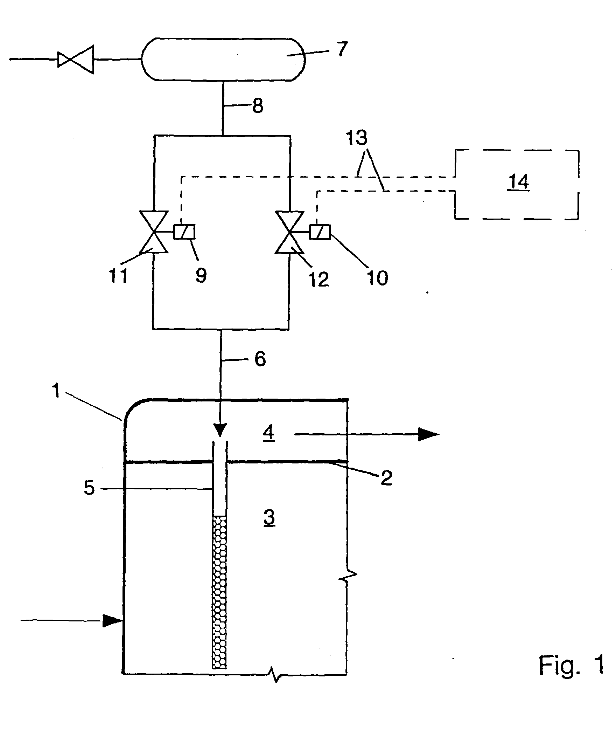

Der Reingasraum 4 des Filters kann auch durch Kanäle gebildet sein, die in dem Filterbehälter 1 angeordnet sind und auf denen die Filterkerzen 5 aufstehen. Dabei können die Filterkerzen zu Gruppen mit einer gemeinsamen Abführung des Reingases zusammengefaßt werden. Der Vorgang der Staubtrennung und der nachfolgend beschriebenen Abreinigung ist bei diesem Filter grundsätzlich der gleiche wie bei dem in Fig. 1 dargestellten Filter.

Der sich an den Filterkerzen 5 anlagernde Staub muß in zeitlichen Abstände entfernt werden. Zu diesem Zweck wird über Abreinigungslanzen 6 in die Filterkerzen 5 entgegen der Strömungsrichtung des Reingases ein Pulsgas eingeblasen, dessen Druck den Druck des Rohgases übersteigt. Dieses Pulsgas wird in einem Pulsgasbehälter 7 bereit gestellt. Über jeweils eine Pulsgasleitung 8 sind die einzelnen Abreinigungslanzen 6 mit dem Pulsgasbehälter 7 verbunden.

Jede Pulsgasleitung 8 ist durch mehrere mit einem Antrieb 9, 10 versehene Absperrorgane 11, 12 abgesichert. Bei einem Öffnen der Absperrorgane 11, 12 wird eine von der Größe und der Öffnungszeit der Absperrorgane 11, 12 abhängige Menge an Pulsgas der Abreinigungslanze 6 zugeführt. Die Absperrorgane 11, 12 sind ein- und austrittsseitg parallel geschaltet. Die Antriebe 9, 10 der Absperrorgane 11, 12 sind über Steuerleitungen 13 mit einer gemeinsamen Steuereinheit 14 verbunden und werden von dieser angesteuert.

Die Ansteuerung der Absperrorgane 11, 12 erfolgt in der Weise, daß alle Absperrorgane 11, 12 gleichzeitig öffnen und über eine bestimmte Zeit, z. B. 100 ms offen gehalten werden. Danach wird das erste Absperrorgan 11 geschlossen, während das weitere oder die weiteren Absperrorgane 12 geöffnet bleiben und nach einer Zeitdauer von z. B. insgesamt 200 ms geschlossen werden.

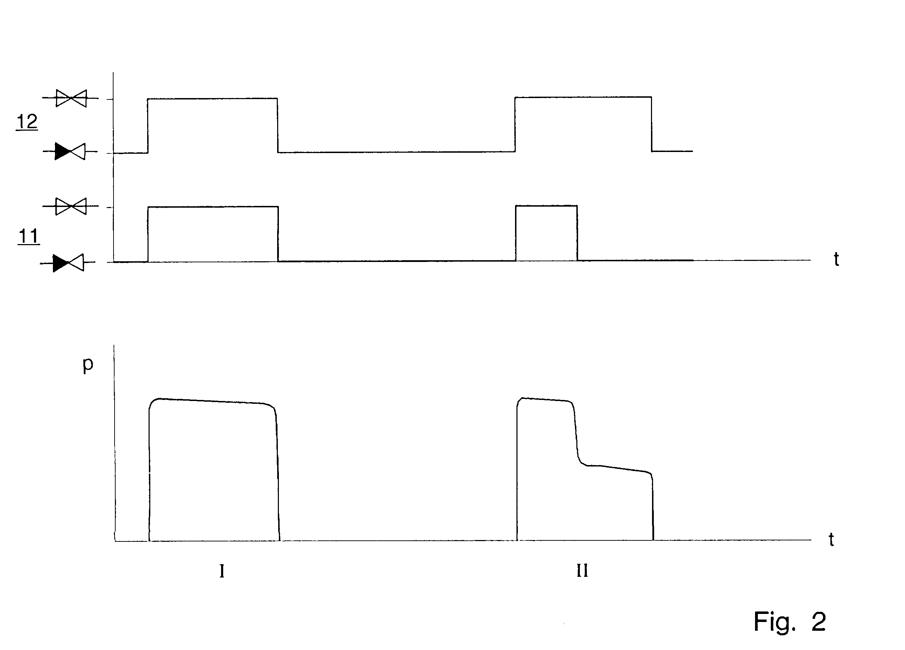

In der Fig. 2 ist der Impulsverlauf für unterschiedliche Ansteuerungen der Absperrorgane 11, 12 dargestellt. Dabei zeigt das obere Diagramm die Betriebsstellung (geöffnet - geschlossen) der Absperrorgane 11, 12 in Abhängigkeit von der Ansteuerzeit t. Das untere Diagramm zeigt den dazu gehörenden zeitlichen Verlauf des Druckimpulses p auf.

Im Fall I werden die beiden in Fig. 1 gezeigten Absperrorgane 11, 12 mit gleicher Dauer angesteuert. Es ergibt sich praktisch eine Verdoppelung der Durchflußmenge eines einzelnen Absperrorgans. Der Druckimpuls bleibt im wesentlichen gleich hoch. Werden gemäß der Erfindung (Fall II) die beiden Absperrorgane 11, 12 gleichzeitig jedoch mit unterschiedlicher Impulsdauer angesteuert, so ergibt sich ein anderer Verlauf, bei dem zunächst ein hoher Impuls zum Ablösen des an den Filterkerzen 5 anhaftenden Filterkuchens aufgebracht wird. Schließt das erste Absperrorgan 11, stellt sich ein geringeres Druckniveau ein, das eine Wiederanlagerung des abgelösten Staubes verhindert. Mit dieser Betriebsweise läßt sich der Verbrauch an Pulsgas minimieren.

## Patentansprüche

1. Vorrichtung zum Abreinigen von Filterelementen mit Hilfe von Pulsgas führenden Abreinigungslanzen (6), die mit einem Pulsgasbehälter (7) über jeweils eine Pulsgasleitung (8) verbunden sind, in der ein über eine Steuereinheit (14) ansteuerbares Absperrorgan (11) angeordnet ist, dadurch gekennzeichnet, daß zu dem Absperrorgan (11) mindestens ein weiteres Absperrorgan (12) ein- und austrittsseitig parallel geschaltet ist, das über die gleiche Steuereinheit (14) in der Weise ansteuerbar ist, daß alle Absperrorgane (11, 12) gleichzeitig und mit unterschiedlicher Impulsdauer ansteuerbar sind.

2. Verfahren zum Abreinigen von Filterelementen mit Hilfe eines Pulsgases erhöhten Druckes, dadurch gekennzeichnet, daß der einem oder einer Gruppe von Filterelementen zugeführte Pulsgasstrom in mehrere Teilströme aufgeteilt wird und daß einer oder mehrere der Teilströme zeitlich vor dem oder den übrigen Teilströmen abgeschaltet wird.

## Revendications

1. Invention concernant un dispositif permettant de nettoyer des éléments filtrants à l'aide de lances de nettoyage (6) guidant du gaz pulsé. Lesdites lances de nettoyage sont reliées dans chaque cas à un réservoir de gaz pulsé (7) par l'intermédiaire d'une conduite de gaz pulsé (8) dans laquelle est placé un organe d'arrêt (11) qui est piloté par une unité de commande (14). Ce dispositif se caractérise en ce qu'outre l'organe d'arrêt (11), il est prévu au moins un autre organe d'arrêt (12) monté en parallèle côté entrée et côté sortie. Cet autre organe d'arrêt peut être piloté par la même unité de commande (14), de manière que tous les organes d'arrêt puissent être pilotés simultanément et avec une durée d'impulsion différente.

2. Invention concernant un procédé permettant de nettoyer des éléments filtrants à l'aide de gaz pulsé sous pression élevée, qui se caractérise en ce que le courant de gaz pulsé acheminé jusqu'à un élément filtrant ou jusqu'à un groupe d'éléments filtrants est réparti en plusieurs courants partiels. Ce procédé se caractérise en ce qu'un ou plusieurs de ces courants partiels est(sont) arrêté(s) temporellement avant le ou les autres courants partiels.

## Claims

1. Device for the cleaning down of filter elements with the assistance of cleaning lances (6) which conduct pulse gas and which are each connected with a pulse gas container (7) by way of a respective pulse gas duct (8), in which a blocking element (11) controllable in drive by way of a control unit (14) is arranged, characterised in that at least one further blocking element (12) is connected in parallel with the blocking element (11) at the inlet end and outlet end and is controllable in drive by way of the same control unit (14) in the manner that all blocking elements (11, 12) are controllable in drive simultaneously and with different pulse duration.

2. Method for cleaning down filter elements with the assistance of a pulse gas of increased pressure, characterised in that the pulse gas flow fed to a filter element or a group of filter elements is divided into several part flows and that one or more of the part flows is switched off in time before the remaining part flow or flows.
